# EUROPEAN PATENT SPECIFICATION

(11) **EP 2 665 334 B1**
(45) Date of publication and mention of the grant of the patent: **24.10.2018**
(21) Application number: 11855679.4
(22) Date of filing: 13.12.2011
(51) Int. Cl.: H04W 88/06, H04W 24/04

(54) **COMMUNICATION METHOD AND SYSTEM WITH VARIOUS RADIO TECHNOLOGIES COEXISTING IN TERMINAL**
KOMMUNIKATIONSVERFAHREN UND -SYSTEM MIT VERSCHIEDENEN IN EINEM ENDGERÄT KOEXISTIERENDEN FUNKTECHNOLOGIEN
PROCÉDÉ ET SYSTÈME DE COMMUNICATION AVEC COEXISTENCE DE DIVERSES TECHNOLOGIES RADIO DANS UN TERMINAL

(30) Priority: 10.01.2011 CN 201110004182
(43) Date of publication of application: 20.11.2013
(73) Proprietor: ZTE Corporation, Shenzhen, Guangdong 518057 (CN)
(72) Inventor: YAO, Jun, Shenzhen Guangdong 518057 (CN); SHI, Xiaojuan, Shenzhen Guangdong 518057 (CN); HUANG, Yada, Shenzhen Guangdong 518057 (CN)
(74) Representative: Novagraaf Technologies
(86) International application number: PCT/CN2011/083888
(87) International publication number: WO 2012/094935

(56) References cited:
- EP-A1- 1 119 137
- WO-A1-2012/088270
- CN-A- 1 659 827
- CN-A- 1 842 188
- CN-A- 101 622 897
- CN-A- 102 143 521
- CN-A- 102 158 869
- CN-A- 102 170 644
- US-A1- 2004 137 849
- US-A1- 2008 146 227
- US-A1- 2010 304 685

## Description

### Field

The present invention relates to the radio communication field, in particular to a communication method and a communication system with various radio technologies coexisting in UE.

### Background

With the development of radio technology and smart terminal device, it is required to integrate various radio technologies in one same User Equipment (UE) in order to support different communication requirements of terminal clients. The modules of two or more radio technologies communicate with peer entities simultaneously.

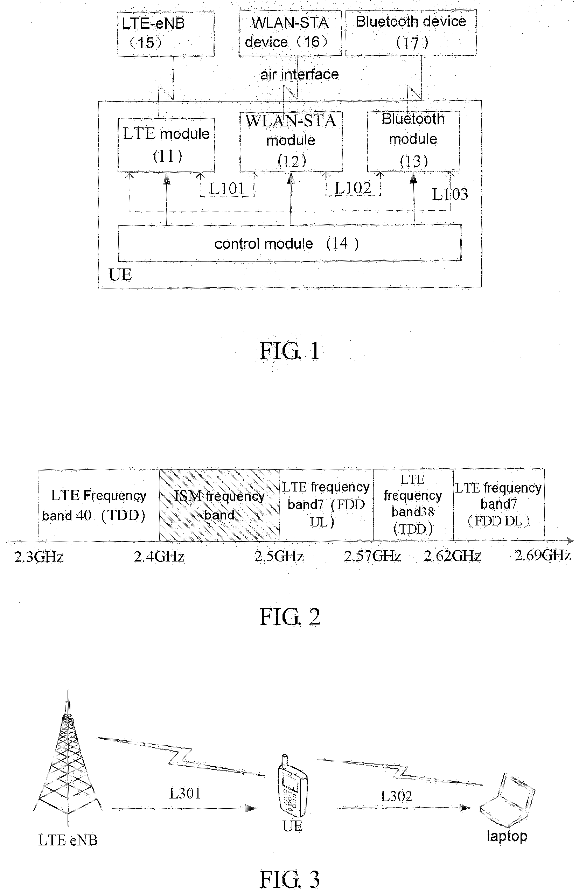

Fig. 1 shows a schematic diagram of UE using three radio technologies simultaneously in conventional art; this UE includes a module 11 using Long Term Evolution (LTE) technology, a module 12 using Wireless Local Area Network (WLAN) technology stipulated by IEEE Std 802.11 specifications, that is, WLAN Station (STA), and a module 13 using Bluetooth radio technology stipulated by IEEE Std 802.15 specifications. The three modules 11, 12, 13 are connected with each other through inter-radio interfaces. For example, the module 11 and the module 12 are connected through L101; the module 12 and the module 13 are connected through L102; the module 11 and the module 13 are connected through L103; or, the three modules are controlled by one common control module 14.

In Fig. 1, the three modules of the UE respectively perform radio communication with the corresponding opposite end device which is corresponding to respective radio technology. In the above, the module 11 performs radio communication with an LTE E-UTRAN NodeB (eNB) 15 through an air interface, the module 12 performs radio communication with another WLAN STA device 16 through an air interface, and the module 13 performs radio communication with another Bluetooth device 17 through an air interface.

When the modules of various radio technologies are provided in one same UE, due to limit volume of the UE, the spatial distance among the modules, which are corresponding to two or more radio technologies, is short in the UE in which the two or more radio technologies are provided simultaneously, for example, the distance is a few centimeters, even a few millimeters; that is to say, the spatial interval among antenna ports used by the two or more radio technologies may not be designed big enough; thus, when all radio technologies in one same UE work on adjacent frequency bands, the transmission of one radio technology module would interfere with the receiving of another radio technology module due to out-of-band emission, spurious emissions, receiver blocking and other reasons; and vice versa. Furthermore, the existing filter technology can not eliminate the adjacent-frequency interference; thus, the communication quality of each radio technology module is impacted. The interference mentioned above is called In-device Coexistence(IDC) Interference.

Take the UE shown in Fig. 1 for example; the WLAN and the Bluetooth work on an Industrial Scientific and Medical (ISM) frequency band (2.4GHz to 2.5GHz), in which the WLAN channel uses a frequency band between 2.4GHz and 2.4835GHz in the ISM frequency band, and the Bluetooth channel uses a frequency band between 2.4GHz and 2.497GHz in the ISM frequency band. LTE Time Division Duplex (TDD) mode works on a frequency band 40 (Band 40: 2.3GHz to 2.4GHz) and a frequency band 38 (Band 38: 2.57GHz to 2.62GHz); uplink transmission of Frequency Division Duplex (FDD) mode works on a frequency band between 2.5GHz to 2.57GHz of band 7, and downlink transmission of FDD mode works on a frequency band between 2.62GHz to 2.69GHz of band 7. As shown in Fig. 2, the ISM frequency band is adjacent to the Band 40 of the LTE TDD mode and the uplink transmission frequency band of the LTE FDD mode. Therefore, if the module 11 adopts the TDD mode and uses the Band 40, the module 11 would interfere with the module 12 and the module 13; if the module 11 adopts the FDD mode and uses the Band 7, since the uplink frequency band of the LTE Band 7 is adjacent to the ISM frequency band, the uplink transmission of the module 11 would interfere with the downlink receiving of the module 12 or the module 13.

In an existing LTE system, the UE detects external interference by measuring Reference Signal Received Quality (RSRQ); this mode is applicable to the scene in which the network already knows the interference source. Generally, the network may configure reasonable measurement evaluation and measurement report parameters according to the network planning and optimization. The network may judge whether the UE in a serving cell suffers interference according to a signal quality measurement result of the serving cell and a signal quality measurement result of a neighbor cell reported by the UE. If it is judged that the UE suffers interference, the NodeB can guarantee the communication quality of the UE through an inter-cell interference coordination technology or by switching the UE to a neighbor cell. During the measurement process of the UE in the existing LTE system, since the external interference generally undergoes a process from weak to strong, the measurement result reported to the NodeB by the UE is a result obtained by filtering each measurement within a period (for example, 320ms, even longer), so as to prevent the ping-pang handover of the UE caused by temporary jittering of signal. Different from the external interference, IDC interference has characteristics of abruptness and strong interference.

The existence of IDC interference would reduce the communication quality of different radio technologies in a smart terminal; take the application shown in Fig. 3 for example; a smart UE is configured with an LTE module using LTE technology and a module using WLAN technology, and has a function of Wireless Fidelity (WiFi) portal router. In the above, LTE eNB communicates with the LTE module of the UE through an air interface L301; and the WLAN module of the UE communicates with a Laptop through an air interface L302. When the LTE module of the UE works at a frequency point of 2.390GHz, the WLAN module works on a frequency band between 2.401 GHz and 2.423GHz, and the LTE module of the UE receives data on downlink while the WLAN module just transmits data to the Laptop, the LTE module would suffer interference from the WLAN module. However, the data sent to the Laptop from the WLAN module is the received downlink data for the LTE module, thus, the interference from the WLAN device causes a low efficiency of downlink data reception of the LTE module, and further impacts the efficiency of the WLAN module transmitting data to the Laptop; ultimately, user experience is impacted. Vice versa, the uplink transmission of the LTE module would interfere with the receiving of the WLAN module, and meanwhile would impact L301 and L302 communication links, thereby impacting user experience.

Therefore, when multiple different radio technologies coexist in a terminal device, IDC interference of the terminal would reduce the communication quality of the multiple different radio technologies, thereby impacting user experience.

WO2012/088270 discloses interference mitigation in a device having multiple radios; US 2010/304685 discloses techniques for performing radio coexistence management; and US 2008/146227 discloses a method and a system for collecting interference status information of a subscriber station by a coexistence base station.

### Summary

In view of the above, the present invention is to provide a communication method and a communication system with various radio technologies coexisting in UE, so as to solve the problem that IDC interference of the UE would reduce the communication quality of the various radio technologies when the various radio technologies coexist in the UE.

The technical solution of the present invention is as follows.

The present invention provides a communication method with various radio technologies coexisting in UE, which includes:
the UE evaluating a state of IDC interference independently and/or according to a policy configured by a network side, and reporting information of the state of IDC interference to the network side; and
the UE executing a decision indicated by the network side.

In the above, the UE evaluating the state of IDC interference independently specifically is embodied as:
the UE evaluating the state of IDC interference according to a state of each radio module coexisting in the UE.

The state of each radio module coexisting in the UE refers to an enabled/disabled state of each radio module coexisting in the UE.

If the radio module is in the enabled state, the information of the state further includes at least one of the following: working frequency information of each radio module in an enabled state, transmitter technical indicator of each radio module in the enabled state, receiver technical indicator of each readio module in the enabled state.

The policy configured by the network side is:
a measurement event A1/2 with Reference Signal Received Quality(RSRQ) measurement, or,
a threshold for evaluating the IDC interference.

The information of the state of IDC interference reported to the network side by the UE includes:
interference/noninterference frequency information of the radio technologies or interference/noninterference frequency scope information of the radio technologies , where in the radio technologies are used to communicate with the network side;
or, interference/noninterference frequency information of the radio technologies or interference/noninterference frequency scope information of the radio technologies and additional interference information, wherein the radio technologies are used to communicate with the network side.

The additional interference information includes at least one of the following:
measurement results of a currently available serving cell and/or measurement results of one or more neighbor cells;

TDM information of various radio technologies which are working in a TDM mode; and
interference direction of the IDC interference.

The decision indicated by the network side includes at least one of the following:
stopping or canceling one or more interference suppression procedures already executed by the UE;
switching to a cell which would not interfere with other radio technologies in the UE;
deleting or deactivating one or more Secondary Cells (Scells) where the IDC interference is generated;
adding or activating one or more Scells where IDC interference would not be generated;
the UE performing measurement according to a further measurement configuration configured by the network side, reporting measurement results according to measured content and waiting a further decision indicated by the network side;
configuring a TDM working mode for one or more enabled modules generating the IDC interference; and
reducing or limiting transmit power of the one or more modules generating the IDC interference.

The method further includes:
when the UE sends the information of the state of IDC interference to the network side, the UE disabling one or more radio modules that are in the enabled state and use an ISM frequency band inside the UE, and enabling one or more radio module that are disabled again after the UE receives a further indication from the network side.

The method further includes:
when the decision indicated by the network side is the UE performing measurement according to a further measurement configuration configured by the network side, and the UE report measurement results according to measured content and wait the further decision indicated by the network side, during the period from the time when the UE receives the further measurement configuration to the time when the UE reports the measurement results, one or more radio modules, which are in the enabled state and use the ISM frequency band inside the UE, working in a measurement gap only.

The method further includes:
when the network side sends information to the UE for the first time during an interference suppression process, the network side starts an IDC interference timer, before the IDC interference timer times out, if the network side receives a feedback of interference suppression completed from the UE, the network side, stopping the IDC interference timer, otherwise, the network side notifying the UE to re-execute the interference suppression process or adopting other interference suppression processes.

The present invention also provides a communication system with various radio technologies coexisting in UE, which includes UE and a network side, wherein
the UE is configured to evaluate a state of IDC interference independently and/or according to a policy configured by the network side, and to report information of the state of IDC interference to the network side, and further configured to execute a decision indicated by the network side; and
the network side is configured to indicate the decision to the UE according to the information of the state of IDC interference reported by the UE.

The UE is further configured to evaluate the state of IDC interference according to a state of each radio module coexisting in the UE.

The state of each radio module coexisting in the UE refers to an enabled/disabled state of each radio module coexisting in the UE.

If the radio module is in the enabled state, the information of the state further includes at least one of the following: working frequency information of each radio module in the enabled state, transmitter technical indicator of each radio module in the enabled state, receiver technical indicator of each radio module in the enabled state.

The policy configured by the network side is:
a measurement event A1/2 with Reference Signal Received Quality(RSRQ) measurement, or,
a threshold for evaluating the IDC interference.

The information of the state of IDC interference reported to the network side by the UE includes:
interference/noninterference frequency information of the radio technologies or interference/noninterference frequency scope information of the radio technologies, wherein the radio technologies are used to communicate with the network side; or
interference/noninterference frequency information of the radio technologies or interference/noninterference frequency scope information of the radio technologies, and additional interference information, wherein the radio technologies are used to communicate with the network side.

The additional interference information includes at least one of the following:
measurement results of a currently available serving cell and/or measurement results of one or more neighbor cells;
TDM information of various radio technologies which are working in a TDM mode; and
interference direction of the IDC interference.

The decision indicated by the network side includes at least one of the following:
stopping or canceling one or more interference suppression procedures already executed by the UE;
switching to a cell which would not interfere with other radio technologies in the UE;
deleting or deactivating one or more Scells where IDC interference is generated;
adding or activating one or more Scells where IDC interference would not be generated;
the UE performing measurement according to a further measurement configuration configured by the network side, reporting measurement results according to measured content and waiting a further decision indicated by the network side;
configuring a TDM working mode for one or more enabled modules generating the IDC interference; and
reducing or limiting transmit power of the one or more modules generating the IDC interference.

The UE is further configured to disable one or more radio modules that are in the enabled state and using an ISM frequency band inside the UE, when sending the information of the state of IDC interference to the network side, and to enable one or more radio modules that are disabled after receiving a further indication from the network side.

When the decision indicated by the network side is the UE performing measurement according to a further measurement configuration configured by the network side, and the UE reports measurement results according to measured content and waits the further decision indicated by the network side, during the period from the time when the UE receives the further measurement configuration to the time when the UE reports the measurement results, one or more radio modules, which are in the enabled state andusing the ISM frequency band inside the UE, work in a measurement gap only.

The network side is further configured: to start an IDC interference timer, when sending information to the UE for the first time during an interference suppression process, before the IDC interference timer times out, if the network side receives a feedback of interference suppression completed from the UE, the network side stops the IDC interference timer; otherwise, the network side notifies the UE to re-execute the interference suppression process or adopt other interference suppression processes.

In the communication method and system with various radio technologies coexisting in UE provided by the present invention, the UE evaluates the state of IDC interference independently and/or according to a policy configured by the network side, and reports the obtained information of the state of IDC interference to the network side; and the UE executes a policy used for solving IDC interference indicated by the network side. With the present invention, the communication quality of various different radio technologies can be improved when the various different radio technologies coexist in the UE, and the communication experience of users can be improved.

### Brief Description of the Drawings

Fig. 1 shows a schematic diagram of UE using three radio technologies simultaneously in conventional art;
Fig. 2 shows a schematic diagram of the distribution of an ISM frequency band and an LTE frequency band in conventional art;
Fig. 3 shows an schematic diagram of applications of LTE and WLAN coexistence in conventional art;
Fig. 4 shows a flowchart of a communication method with various radio technologies coexisting in UE according to the present invention;
Fig. 5 shows a flowchart of a first communication method with various radio technologies coexisting in UE according to an embodiment of the present invention;
Fig. 6 shows a flowchart of a second communication method with various radio technologies coexisting in UE according to an embodiment of the present invention;
Fig. 7 shows a schematic diagram of a policy used for solving IDC interference and UE executing the policy according to an embodiment of the present invention;
Fig. 8 shows a flowchart of a first embodiment for implementing UE communication according to the present invention;
Fig. 9 shows a flowchart of a second embodiment for implementing UE communication according to the present invention;
Fig. 10 shows a flowchart of a third embodiment for implementing UE communication according to the present invention;
Fig. 11 shows a flowchart of a fourth embodiment for implementing UE communication according to the present invention; and
Fig. 12 shows a flowchart of a fifth embodiment for implementing UE communication according to the present invention.

### Detailed Description of the Embodiments

A detailed description is given to the preferred embodiments of the present invention with reference to the accompanying drawings.

The present invention is applicable to UE in which at least two radio technologies coexist; in order to reduce IDC interference and to improve communication quality of the UE, in all implementations below, a communication method with various radio technologies coexisting in UE is described by taking the interaction between an LTE module and an opposite end network when LTE and WLAN or Bluetooth coexist in one same UE for example. However, this is not for limiting the present invention. For example, the method of the present invention also is applicable to the communication with LTE coexisting with other radio technologies, and the communication with Universal Mobile Telecommunication System (UMTS) coexisting with other radio technologies. Corresponding to the LTE module, the network side mentioned in the present invention refers to an eNB; corresponding to the UMTS module, the network side refers to a NodeB (NB). Reporting to the network side by the UE mentioned in the present invention refers to reporting to the network side by a radio module inside the UE communicating with the network side. Indicating to the UE by the network side mentioned in the present invention refers to indicating to the radio module inside the UE communicating with the network side by the network side.

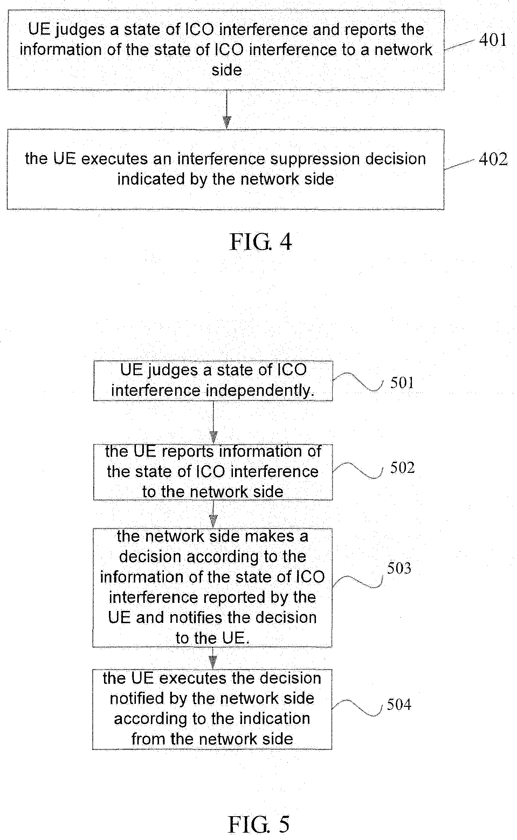

The present invention provides a communication method with various radio technologies coexisting in UE. As shown in Fig. 4, the method mainly includes the following steps.

Step 401, UE evaluates a state of IDC interference and reports the information of the state of IDC interference to a network side.

In the above, the method of the UE evaluating the state of IDC interference may include two schemes as follows.

Scheme 1, the UE evaluates the state of IDC interference independently.

Specifically, the UE evaluates the state of IDC interference according to a state of each radio module coexisting in the UE. The state of each radio module coexisting in the UE refers to an enabled/disabled state of each radio module coexisting in the UE; if the radio module is in the enabled state, the state information also includes one or more of the following: working frequency information of each radio module in enabled state, transmitter technical indicator of each radio module in enabled state, receiver technical indicator of each radio module in enabled state. The judgment method might include the followings.

If there is no IDC interference existing in the UE originally, the current UE may learn the following according to the state of each radio module coexisting in the UE: all radio modules in the UE are in enabled state simultaneously and work on adjacent frequencies; then, the UE can evaluate that the state of IDC interference is the IDC interference exists currently;
if there is IDC interference existing in the UE originally, the current UE may learn the following according to the state of each radio module coexisting in the UE: one or more radio modules which originally generate IDC interference have been in a disabled state, or frequency hopping has occurred on one or more certain radio modules which generate the IDC interference; therefore, each enabled radio module no longer works on an adjacent frequency; then, the UE can evaluate that state of IDC interference is the IDC interference does not exist currently.

Scheme 2, the UE evaluates the state of the IDC interference according to a policy configured by the network side.

Specifically, the policy configured by the network side includes:
Policy 1, the network side configures for the UE a measurement event A1/2 with RSRQ measurement; or,
Policy 2, the network side configures for the UE a threshold for judging the IDC interference.

Corresponding to Policy 1 above, if there is no IDC interference existing in the UE originally, when the UE judges that the measurement event A2 satisfies one or more conditions of triggering a measurement report, the UE can evaluate that the state of IDC interference is that the IDC interference exists currently; if there is IDC interference existing in the UE originally, when the UE judges that the measurement event A1 satisfies one or more conditions of triggering a measurement report, the UE can evaluate that the state of IDC interference is the IDC interference does not exist currently.

Corresponding to Policy 2, if there is no IDC interference existing in the UE originally, when the UE judges that the signal quality of a serving cell is lower than the threshold or when the UE judges that interference strength is higher than the threshold according to the state of each radio module coexisting in the UE, the UE can evaluate that the state of IDC interference is the IDC interference exists currently; if there is IDC interference existing in the UE originally, when the UE judges that the signal quality of a serving cell is higher than the threshold or when the UE judges that interference strength is lower than the threshold according to the state of each radio module coexisting in the UE, the UE can evaluate that the state of IDC interference is the IDC interference does not exist currently.

It should be noted that the UE can perform judgment using one of the two schemes above separately or both of the two schemes above together.

The information of the state of IDC interference refers to interference/noninterference frequency information of the radio technologies or interference/noninterference frequency scope information of the radio technologies, in which the radio technologies are used to communicate with the network side, or, interference/noninterference frequency information of the radio technologies or interference/noninterference frequency scope information of the radio technologies and additional interference information, in which the radio technologies are used to communicate with the network side.

Furthermore, the interference frequency or frequency scope information of the radio technology for communicating with the network side refers to a frequency or frequency scope in which the radio technology for communicating with the network side would generate IDC interference with other enabled radio technologies existing in the device; the noninterference frequency or frequency scope information of the radio technology for communicating with the network side refers to a frequency or frequency scope in which the radio technology for communicating with the network side would not generate IDC interference with other enabled radio technologies existing in the device.

The additional interference information includes at least one of the following:
measurement results of a currently available serving cell and/or measurement results of one or more neighbor cells;
TDM information of various radio technologies which are working in a TDM mode; and
interference direction of the IDC interference.

The TDM information might include one or more of the following:
notification information that the UE needs a TDM working mode;
TDM information of each enabled radio technology, wherein the TDM information of the radio technology refers to the technical type and service type of the enabled radio technology;
cycle information of TDM; and
index information that the UE obtains when querying a TDM information list.

Step 402, the UE executes an interference suppression decision indicated by the network side.

In the above, according to different decisions indicated by the network, the UE can execute one or more of the following policies:
1. Stopping or canceling one or more previous interference suppression procedures (already executed by the UE);
2. Switching to a cell which would not interfere with other radio technologies in the UE;
3. Deleting or deactivating one or more Scells, which generate the IDC interference, notification by the network side, and adding or activating one or more Scell which would not generate the IDC interference according to the notification from the network side;
4. Further measurement, that is, the UE performing measurement according to a further measurement configuration configured by the network side, reporting measurement results according to measured content and waiting a further decision indicated by the network side;
5. Configuring a TDM working mode for one or more enabled modules generating the IDC interference; and
6. Reducing or limiting transmit power of the one or more modules generating the IDC interference.

Hereinafter, a detailed illustration is provided for the implementation of a communication method with at least two radio technologies coexisting in UE through two different schemes that are used for the UE to evaluate IDC interference, respectively.

Fig. 5 shows a flowchart of a communication method with at least two radio technologies coexisting in UE implemented through Scheme 1, which mainly includes the following steps:
Step 501: UE evaluates a state of IDC interference independently.

Specifically, the UE evaluates whether IDC interference exists according to a state of each radio module coexisting in the UE. The state of each radio module coexisting in the UE refers to an enabled/disabled state of each radio module coexisting in the UE; if the radio module is in an enabled state, the state also includes working frequency information of each radio module in enabled state, transmitter technical indicator of each radio module in enabled state, receiver technical indicator of each radio module in enabled state, wherein the transmitter technical indicator includes: out-of-band emission parameters, spurious emission parameters, adjacent channel leakage parameters, transmit power parameters and the like; the receiver technical indicator includes: receiver blocking parameters, receiver received power sensitivity, receiver out-of-band blocking parameters and the like.

Specifically, take the UE shown in Fig. 1 for example; all modules inside the UE using different radio technologies can be interconnected through interfaces, for example, L101 and L103, or, all radio technology modules are controlled by a common control module 14. The LTE module 11 can learn the enabled/disabled state of the module 12/module 13 through any one of the two methods above. Furthermore, if the module 12 and/or module 13 is in the enabled state, the LTE module 11 can learn the working frequency information of the module 12/module 13, the transmitter technical index and receiver technical indicator through the interface 101/103 or the control module 14, and evaluate whether coexistence interference exists or would probably exist according to the obtained working frequency information, transmitter technical indicator and receiver technical indicator. Furthermore, the UE also can judge interference LTE frequency or noninterference LTE frequency information according to the obtained working frequency information, transmitter technical indicator and receiver technical indicator, wherein the interference LTE frequency refers that the LTE module would be interfered by other one ore more radio modules coexisting in the device if the LTE module works on the corresponding frequency, and/or the LTE module would interfere with other one or more radio modules coexisting in the device if the LTE module works on the corresponding frequency. Correspondingly, the noninterference LTE frequency information refers that the LTE module and other one or more radio modules coexisting in the device would not interfere with each other if the LTE module works on the corresponding frequency.

Step 502: the UE reports information of the state of IDC interference to the network side.

The information of the state of IDC interference refers interference/noninterference frequency information of radio technologies or interference/noninterference frequency scope information of the radio technologies communicating with the network side, or, interference/noninterference frequency or frequency scope information of the radio technology and additional interference information, in which the radio technologies are used to communicate with the network side.

Furthermore, the interference frequency or frequency scope information of the radio technology for communicating with the network side refers to a frequency or frequency scope in which the current radio technology for communicating with the network side would generate IDC interference with other enabled radio technologies existing in the device; the noninterference frequency or frequency scope information of the radio technology for communicating with the network side refers to a frequency or frequency scope in which the current radio technology for communicating with the network side would not generate IDC interference with other enabled radio technologies existing in the device.

If the state of IDC interference evaluated by the UE is that there is no or would no IDC interference existing, this is indicated by setting the interference/noninterference frequency or frequency scope information of the radio technology for communicating with the network side to empty.

The additional interference information includes at least one of the following:
measurement results of a currently available serving cell and/or measurement results of one or more neighbor cells;
TDM information of various radio technologies which are working in a TDM mode; and
interference direction of the IDC interference.

Step 503: the network side makes a decision according to the information of the state of IDC interference reported by the UE and notifies the decision to the UE. Depending on different information of the state of IDC interference reported by the UE, the network side provides different decisions.

When the corresponding information of the state of IDC interference is the interference/noninterference frequency or frequency scope information of the radio technology for communicating with the network side, if the information of the state is not empty, the network side can make decisions as follows according to current resources and operator policies.
1. Switching the UE to a cell of same coverage which would not generate the IDC interference.
   According to the information reported by the UE, the usage of network resources and the operation policies of an operator, the network side judges that there is a cell existing in the network which has the same coverage as the current serving cell of the UE and where IDC interference would not be generated, then, the network side can make a decision of switching the UE to the cell of same coverage and notify the UE to switch to the cell of same coverage. Correspondingly, the UE performs switch so as to switch to the cell of same coverage.
2. Deleting or deactivating one or more Scells where IDC interference would be generated; furthermore, adding or activating one or more Scells where IDC interference would not be generated and which have the same coverage as the deleted or deactivated Scells.
   According to the information reported by the UE, the current working state of the UE, the usage of network resources and the operation policies of an operator, if the UE is performing carrier aggregation currently, that is, the UE works on a Primary Cell (Pcell) and one or more Scells simultaneously, and according to the interference LTE frequency information/noninterference LTE frequency information reported by the UE, the network side judges that the Pcell has no coexistence interference and only one or more Scells therein have coexistence interference, then, the network side can make a decision of deleting/deactivating the one or more Scells having coexistence interference. Further, if the network side judges that there are other cells having no coexistence interference which can perform carrier aggregation with the Pcell according to the deployment of carrier aggregation and/or measurement results of one or more neighbor cells reported by the UE, the network side also can add or activate the other cells having no coexistence interference which can perform carrier aggregation with the Pcell while making the decision of deleting/deactivating.
3. Configuring a further measurement for the UE or notifying the UE to further report the additional interference information.

When the network side cannot make a decision according to the information reported by the UE, the network side can configure a further measurement for the UE, expecting the UE to further report a measurement result needed by the network; for example, if the network needs the measurement of a neighbor cell, the network side can configure an measurement event A3 with RSRQ measurement for the UE. Or, the network side notifies the UE to further report the additional interference information. Then, the network side waits a further report of information from the UE and makes a further decision.

When the corresponding information of the state of IDC interference is the interference/noninterference frequency or frequency scope information of the radio technology for communicating with the network side, if the information of the state represents that the UE no longer has IDC interference, this can be indicated by setting the information of the state to empty; then, the network side can make a decision of canceling a previous interference suppression policy according to current resources and operator policies.

When the corresponding information of the state of IDC interference is the interference/noninterference frequency or frequency scope information of the radio technology for communicating with the network side and the additional interference information, the network side can make decisions as follows according to the additional information content reported by the UE, current resources and operator policies:
1. If the additional interference information reported by the UE contains the measurement result of a neighbor cell, the network side can make a decision of switching the UE to the neighbor cell or a cell of same coverage where IDC interference would not be generated.
2. If the additional interference information reported by the UE contains the measurement result of a neighbor cell, and the UE is performing carrier aggregation currently, then, the network side can make a decision of deleting or deactivating an Scell where IDC interference would be generated, further, the network side can make a decision of adding or activating the neighbor cell or an Scell where IDC interference would not be generated and which has the same coverage as the deleted or deactivated Scell.
3. If the additional interference information reported by the UE contains the TMD information, the network side can make a decision of configuring a TDM working mode for each enabled radio technology of the UE.
   According to the information reported by the UE, the usage of network resources and transmission requirements of current various radio technologies, the network side judges that spectrum resources are tense in the network and there is no else frequency for the UE to switch, or, IDC interference is serious currently, for example, Bluetooth (BT) technology just works on the lowest 20MHz of the ISM frequency band, the transmission of the BT technology would interfere with the receiving of the entire LTE technology Band 40. Then, the network side configures a reasonable TDM mechanism for the UE according to the service type of each radio technology reported by the UE.
4. If the additional interference information reported by the UE contains direction information of interference, the network side can make a decision of reducing or limiting the power of the interfering module of the UE.

According to the information reported by the UE, if the interference information reported by the UE contains interference LTE frequency information/noninterference LTE frequency information, and the transmission of the LTE technology on Band 7 interfere with the receiving of other radio technologies using the ISM frequency band currently, then, the network side judges that the interference can be reduced to UE recognizable standard through a power control measure, wherein the recognizable standard refers that the UE can normally decode the content received by the BT technology or WLAN technology; the network side can make a decision of reducing the transmit power of the LTE technology in the UE, to reduce IDC interference by configuring a proper power control method.

Step 504: the UE executes the decision notified by the network side according to the indication from the network side.

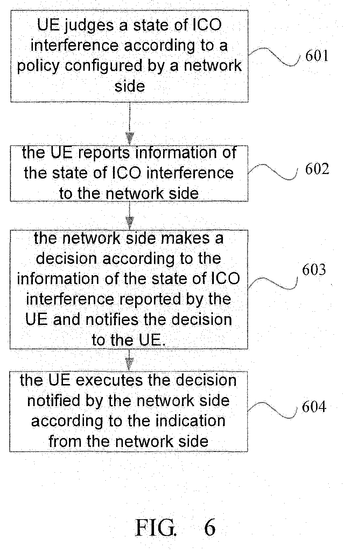

Fig. 6 shows a flowchart of a communication method with at least two radio technologies coexisting in UE implemented through Scheme 2, which mainly includes the following steps:
Step 601: UE evaluates a state of IDC interference according to a policy configured by a network side.

In a connection state, the UE must measure the signal quality of a serving cell, including measurement of Reference Signal Received Power (RSRP) and measurement of RSRQ, wherein the measurement result of RSRQ can reflect the interfered condition of the UE; in addition, in order to obtain the signal quality of the UE in the serving cell immediately, the network side can configure for the UE a measurement event used for the serving cell, for example, measurement event A1/2, wherein the condition of the measurement event A1/2 for triggering a report of measurement result is respectively that the signal quality of the service cell is higher than and lower than a threshold respectively.

Therefore, the policy configured by the network side specifically can include: configuring a measurement event A2 with RSRQ measurement for the UE through the measurement event A1/2. If there is no IDC interference existing in the UE originally, when the UE judges that the measurement event A2 satisfies the condition of triggering a measurement report, the UE can evaluate that the state of IDC interference is the IDC interference exists currently; if there is IDC interference existing in the UE originally, when the UE judges that the measurement event A1 satisfies the condition of triggering a measurement report, the UE can evaluate that the state of IDC interference is the IDC interference does not exist currently.

The policy configured by the network side specifically can further include: configuring a threshold used for judging coexistence interference for the UE, by the network side. If there is no IDC interference existing in the UE originally, when the UE judges that the signal quality of the serving cell is lower than this threshold or when the UE judges that interference strength is higher than this threshold according to the state of each radio module coexisting in the UE, the UE can evaluate that the state of IDC interference is IDC interference exists currently; if there is IDC interference existing in the UE originally, when the UE judges that the signal quality of the serving cell is higher than this threshold or when the UE judges that interference strength is lower than this threshold according to the state of each radio module coexisting in the UE, the UE can judge that IDC interference does not exist currently.

The operation of subsequent Steps 602 to 604 is the same as that of Steps 502 to 504 respectively, and no further description is needed here.

Hereinafter, a communication method with two radio technologies coexisting in a device provided by the present invention is described in detail in conjunction with specific embodiments.

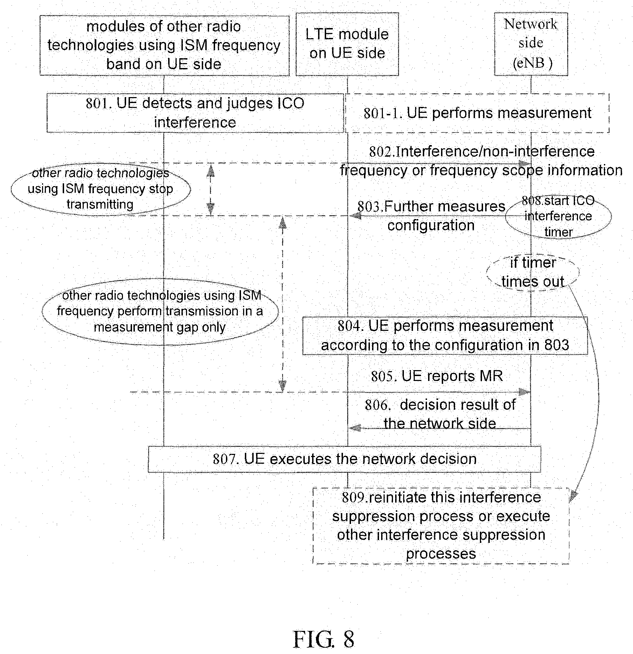

Fig. 8 shows a process of a first specific embodiment for suppressing IDC interference when UE judges the occurrence of IDC interference in a communication method with at least two radio technologies coexisting in the UE according to the present invention, which takes the communication between an LTE technology and a network side (eNB) for example; the process includes the following steps:
Step 801: the UE detects and judges the existence of IDC interference. The UE can evaluate the occurrence of IDC interference through its own configuration, wherein the evaluation manner depends on the specific structure of the UE. For example, the UE can learn the enabled/disabled state of each radio technology, and, if in enabled state, respective working frequency information, filter technical indicator, and whether out-of-band emission, spurious emission or receiver blocking occurs; then, the UE judges comprehensively whether IDC interference might occur currently. Take the UE shown in Fig. 1 for example:
All modules inside the UE using different radio technologies are interconnected through interfaces, for example, L101 and L103, or, all radio technology modules are controlled by a common control module 14. Therefore, the LTE module 11 can learn the enabled/disabled state of other radio technology modules through any one of the two modes above. Further, if other radio technology modules are in enabled state, the LTE module 11 can learn the working frequency information of other radio technology modules through the interface; if the LTE module 11 and other radio technology modules work on adjacent frequency bands simultaneously, the filter characteristic of the UE is not good and out-of-band emission could very probably occur, then the UE judges that IDC interference occurs currently.

If in conjunction with Scheme 1 and Scheme 2, Step 801-1 is executed simultaneously, that is, the UE performs judgment according to the configuration of network. The UE can judge that it is undergoing IDC interference currently in conjunction with the judgement of the UE in Step 801, according to the policy configured by the network, wherein the policy can be an measurement event A2 with measurement of RSRQ, that is, when it is measured that the received signal quality of current cell is lower than a threshold.

Step 802: the UE reports LTE technology interference/non-interference frequency or frequency scope information. According to the evaluation result in Step 801, the UE reports the LTE technology interference/non-interference frequency or frequency scope information to the network side, wherein a new signalling can be designed for the UE to report the LTE technology interference/non-interference frequency or frequency scope information.

Step 803: the eNB sends a further measurement configuration to the UE or notifies the UE to further report additional interference information. According to the frequency information reported by the UE, the network side configures for the UE proper measurement evaluation and measurement report parameters, so as to make a policy for suppressing IDC interference subsequently and meanwhile to further confirm that the UE indeed is undergoing IDC interference. Here, it should be noted that, in Step 801, when the UE judges whether it is undergoing IDC interference according to the enabled/disabled state of each radio technology module in the device, frequency information and filter characteristics respectively used by each radio technology module. This evaluation manner has certain error probability due to the uncertainty of occurrence of out-of-band emission, spurious emissions, receiver blocking and other conditions. Here, the process that the network side configures a further measurement for the UE can confirm that the UE currently indeed is undergoing IDC interference, so as to improve the reliability of interference judgment and to acquire information needed by further decision.

Or, in order to make a further decision, the network can request a further report of additional interference information.

In order to accelerate interference measurement, certain adjustment can be made in the measurement configuration, for example, reducing the Time To Trigger (TTT) of a measurement report in the measurement configuration, modifying a time trigger threshold in the measurement configuration, and so on.

During the execution process from Step 802 to Step 803, other radio technology modules using the ISM frequency band stop working temporarily; this is to guarantee that the reporting of IDC interference indication and the issuing of measurement configuration information would not fail to transmit for the interference on the LTE technology from other radio technologies in the device.

The advantage of the above is to guarantee the reliability of IDC interference detection, and to reduce the further measurement report the UE needs to provide; on one hand, measurement delay of the UE can be reduced; on the other hand, power consumed by the reporting of UE measurement result can be reduced.

Step 804: the UE performs measurement according to the content of the measurement configured by the network side.

Step 805: the UE provides a Measurement Report (MR) to the network side. For example, the measurement configured for the UE by the network side is relevant to switch, the information reported in this step includes: the measurement result of each neighbour cell, which is saved in a cell trigger list corresponding to respective measurement task in all configured measurement tasks and satisfying the report condition of the respective measurement task in all configured measurement tasks, or the measurement results of several corresponding strongest neighbour cells in the list, wherein the specific number of the neighbour cells is configured for the UE by the network side.

The UE can contain the measurement report in the reported additional interference information.

During the execution process from Step 803 to Step 805, in order to prevent other radio technology modules using the ISM frequency band from impacting the measurement or signalling interaction, it can be regulated that the modules work in a measurement gap only.

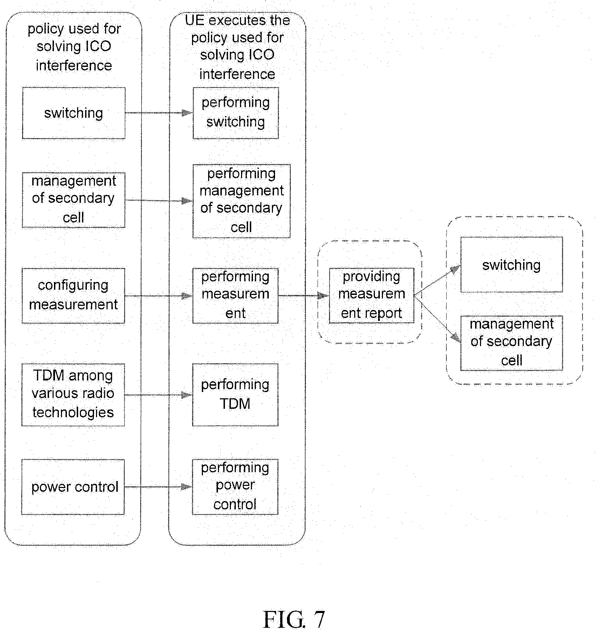

Step 806: the network side issues a decision result to the UE. The decision result can be one or more of multiple policies used for solving IDC interference shown in Fig. 7, but is not limited to the decision shown in this figure.

If the decision issued by the network is to configure measurement, the UE performs measurement according to the decision result from the network side according to the process of configuring measurement shown in Fig. 7, without limiting the number of specific measurements.

Step 807: the UE executes the decision from the network. The UE performs corresponding process according to the decision result provided by the network side in Step 806, and the UE would inform the network side of interference suppression process completed.

In order to guarantee the correct execution of the above process, to optimize the process and to avoid abnormality, necessary protection processes are provided below.

Step 808: start an IDC interference timer. In order to prevent the failure of the following process due to the occurrence of sudden error during the signalling interaction of the following process, the network side starts an IDC interference timer when sending information to the UE for the first time during the interference suppression process; in this process, the IDC interference timer is started while Step 803 is executed.

Before the IDC interference timer times out, if the network side receives the feedback of interference suppression process completed from the UE mentioned in Step 807, the network side stops the IDC interference timer; then, this interference suppression process is finished; when the IDC interference timer times out, if the network side does not receive the feedback from the UE, this interference suppression process fails, then Step 809 is executed.

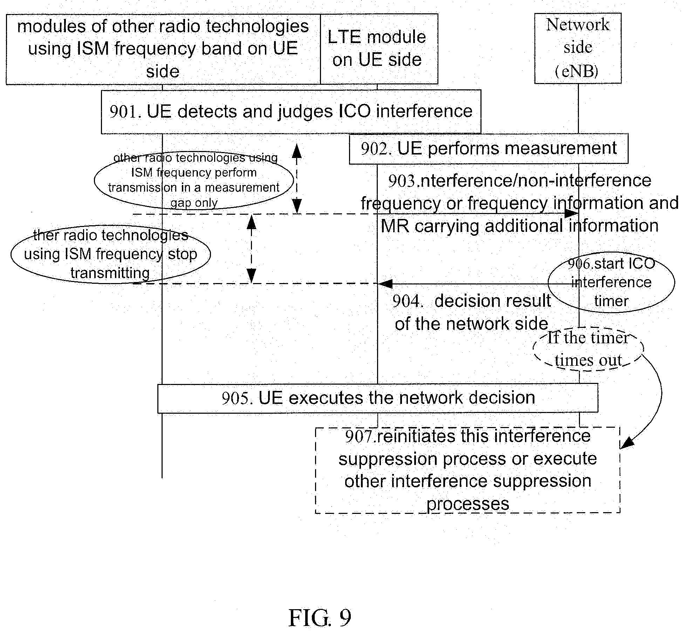

Step 809: adopt other interference suppression processes or notify the UE to re-execute the above process. The other interference suppression processes can be any one of the processes shown in Fig. 9, Fig. 10 and Fig. 11, but are not limited to these processes, wherein all feasible interference suppression processes are included in the above optional scope. The network side also can notify the UE to re-execute the above process, that is, return to Step 801.

Here, In order to make the network side to control flexibly and reduce the total time of the interference suppression process as far as possible, the time length of the IDC interference timer is different which is configured according to different network resource conditions.

It should be noted that it is necessary for the UE to detect and evaluate IDC interference again; due to the abruptness of IDC interference, the LTE module of the UE and other radio technology modules using the ISM of the UE probably would not interfere with each other in the second judgment, for example, other radio technology modules using the ISM has been disabled; or, the service type has been changed in the second detection. Both of the two conditions would cause a different report of interference information from the previous time.

The above process has more flexible operation, prevents the UE performing invalid measurement and reduces the time delay needed by measurement; moreover, the probability of error is smaller if the length of the information block transmitted each time is shorter, thus, the reliability of information transmission is guaranteed.

Fig. 9 shows a process of a specific embodiment for implementing Scheme 1 or a process of an embodiment for implementing the combination of Scheme 1 and Scheme 2 according to a different content measured by the UE in Step 902. When the UE judges the existence of IDC interference, the process of a second specific embodiment for suppressing IDC interference, which takes the communication between the LTE technology and the network side (eNB) for example, includes the following steps:
Step 901: the UE detects and evaluates IDC interference. Step 901 is the same as Step 801.
Step 902: the UE performs measurement.

If Scheme 1 is adopted: the network side and the UE have set some agreements on the reporting of interference information before this step, that is, the measurement results needed by the network side has been issued to the UE before this step, wherein the measurement results might include: interference direction, that is, interference of communication quality on other radio technologies using the ISM frequency band from the LTE technology, or, interference of communication quality on the LTE technology from the radio technology using the ISM frequency band, or both of the two above; measurement result of a serving cell; measurement results of one or more neighbour cells; service types of various radio technologies and the like. All measurement results needed when the network makes an interference suppression decision can be obtained through the measurement in this step.

Before this step, the network provides a predetermined configuration to the UE aiming at the needed measurement, wherein the configuration can be notified to the UE through other processes such as modification broadcast process, Radio Resource Control (RRC) connection establishment process, RRC connection reestablishment and RRC connection reconfiguration; the configuration information includes specific measurement operations needed to be executed and specific measurement results needed to be reported to the network side if IDC interference might occur in the UE.

If Scheme 1 and Scheme 2 are combined: when performing measurement in this step, the UE first can judge that it is undergoing IDC interference currently in conjunction with the judgement of the UE in Step 901, according to a policy configured by the network, wherein the policy can be an measurement event A2 with RSRQ measurement, that is, when it is measured that the received signal quality of current cell is lower than a threshold; then, according to the agreements set on the reporting of interference information by the network side and the UE before this step, that is, the measurement results needed by the network side has been issued to the UE before this step, the measurement results might include: interference direction, that is, interference of communication quality on other radio technologies using the ISM frequency band from the LTE technology, or, interference of communication quality on the LTE technology from the radio technology using the ISM frequency band, or both of the two above; measurement result of a serving cell; measurement results of one or more neighbour cell; service types of various radio technologies and the like. All measurement results needed when the network makes an interference suppression decision can be obtained through the measurement in this step.

Before this step, the network provides a predetermined configuration to the UE aiming at the needed measurement, wherein the configuration can be notified to the UE through other processes such as modification broadcast process, RRC connection establishment process, RRC connection reestablishment and RRC connection reconfiguration; the configuration information includes specific measurement operations needed to be executed and specific measurement results needed to be reported to the network side if IDC interference might occur in the UE.

Step 903: the UE reports LTE technology interference/non-interference frequency or frequency information and an MR carrying additional information. The UE reports the IDC interference indication and the MR carrying additional information, according to the evaluation that the UE currently is undergoing IDC interference in Step 901 and the various measurements in Step 902. Here, it should be noted that this step equals merging the contents reported in Step 802 and Step 805 to report, but different from the merging of steps, the content reported in this step probably is more than the merged content, because the preconfigured measurement content is more than the content of the measurement configuration configured in real time.

During the execution process from Step 901 to Step 903, in order to prevent other radio technology modules using the ISM frequency band from impacting the measurement or signalling interaction, it can be regulated that the modules work in a measurement gap only.

Step 904: the network side sends a decision result to the UE. The decision made by the network is as shown in Fig. 7; it should be noted that the decision result included in this step does not include the further measurement shown in Fig. 7, because the network side has configured the needed measurement for the UE in advance.

During the execution process from Step 903 to Step 904, other radio technology modules using the ISM frequency band stop working temporarily; this is to guarantee that the reporting of IDC interference indication and measurement results, the issuing of network decision result would not fail to transmit for the interference on the LTE technology from other radio technologies in the device.

Step 905: the UE executes the decision from the network. Step 905 is the same as Step 807.

In order to guarantee the correct execution of the above process, to optimize the process and to avoid abnormality, necessary protection processes are provided below.

Step 906: start an IDC interference timer. In order to prevent the failure of the following process due to the occurrence of sudden error during the signalling interaction of the following process, the network side starts an IDC interference timer when sending information to the UE for the first time during the interference suppression process; in this process, the IDC interference timer is started while Step 904 is executed.

Before the IDC interference timer times out, if the network side receives the feedback of interference suppression process completed from the UE mentioned in Step 905, the network side stops the IDC interference timer; then, this interference suppression process is finished; when the IDC timer times out, if the network side does not receive the feedback from the UE, this interference suppression process fails; then Step 907 is executed.

Step 907: adopt other interference suppression processes or notify the UE to re-execute the above process. The other interference suppression processes can be any one of the processes shown in Fig. 8, Fig. 10 and Fig. 11, but are not limited to these processes, wherein all feasible interference suppression processes are included in the above optional scope. The network side also can notify the UE to re-execute the above process, that is, return to Step 901.

Here, In order to make the network side to control flexibly and reduce the total time of the interference suppression process as far as possible ,the time length of the IDC interference timer is different which is configured according to different network resource conditions.

The advantage of the above process lies in that, from Step 901 (that is, the UE detects and judges that it is undergoing IDC interference currently) to Step 905 (that is, the UE executes the decision result from the network), the number of signalling interactions is smaller and the time delay of the control plane is less.

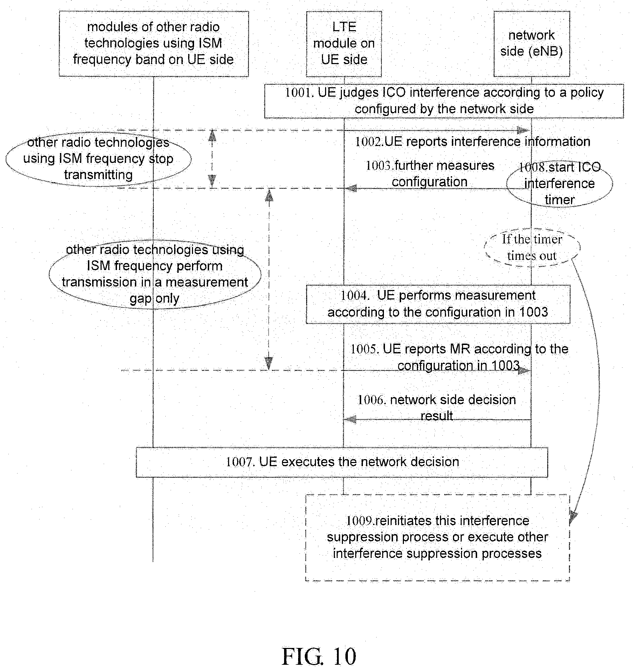

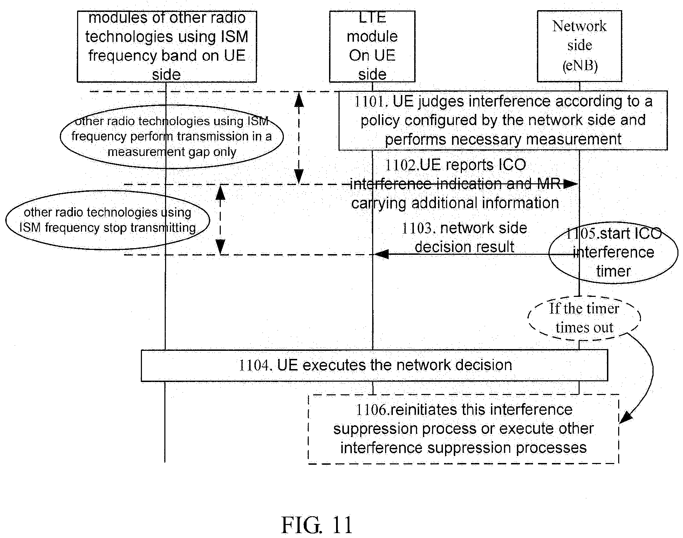

Fig. 10 and Fig. 11 show a process of a specific embodiment for implementing Scheme 2 in the present invention. When the UE judges the existence of IDC interference, the process of a third specific embodiment for suppressing IDC interference, which takes the communication between the LTE technology and the network side (eNB) for example, includes the following steps as shown in Fig. 10.

Step 1001: the UE evaluates IDC interference according to a policy configured by the network side. Before this step, the network side configures for the UE a specific policy used for evaluating IDC interference, wherein the policy configured by the network might include:
1. The network side configures for the UE an measurement event A2 with measurement of RSRQ; or,
2. The network side configures for the UE a threshold used for evaluating coexistence interference.

In the above, the UE performs judgment according to the policy configured by the network side; further, the UE also can report interference information to the network in conjunction with the judgment of the UE based on the policy configured by the network side; corresponding to the policy configured by the network, the reported content specifically includes:
corresponding to Policy 1, when the UE judges that the measurement event A2 satisfies a condition of triggering a measurement report, the UE sends a measurement report triggered by the measurement event A2 to the network;
corresponding to Policy 2, when the UE judges that the signal quality of a serving cell is lower than this threshold or when the UE judges that interference strength is higher than this threshold according to the state of each radio module coexisting in the UE, the UE reports the interference information to the network.

Step 1002: the UE reports the interference information. According to the configuration of the specific network policy used for evaluating IDC interference, the UE performs specific MR reporting. If the network configures for the UE the measurement event A2 as the specific policy used for evaluating IDC interference, when the UE detects that the signal strength of the serving cell is lower than a preset threshold and TTT time times out, the UE sends an MR triggered by the measurement event A2 to the network. The above is only an illustration, and this step is not limited to this example.

Step 1003: the network side sends a further measurement configuration to the UE. Before this step, after receiving the MR reported by the UE, the network side considers that the UE probably is undergoing IDC interference, and then configures a further measurement for the UE, on one hand to confirm that the UE indeed is undergoing IDC interference, and on the other hand to provide necessary information for the network to make an interference suppression decision in following steps. For example, using existing measurement configuration, the network can configure for the UE an measurement event A3(signal strength of a neighbour cell is a preset offset higher than that of the serving cell) or an measurement event A4(signal strength of a neighbour cell is higher than a preset threshold) or an measurement event A5 (signal strength of the serving cell is lower than a threshold 1 and signal strength of a neighbour cell is higher than a threshold 2) of measurement, or any combination of the three events. The network side can configure other new measurement events for the UE, for triggering the reporting of MR.

During the execution process from Step 1002 to Step 1003, other radio technology modules using the ISM frequency band stop working temporarily; this is to guarantee that the reporting of MR and the issuing of the further measurement configuration of the network would not fail to transmit for the interference on the LTE technology from other radio technologies in the device.

Step 1004: the UE performs measurement according to the configuration in Step 1003. Step 1004 is similar to Step 1001, and the difference lies in that the specific configuration of the measurement executed here is not notified to the UE by the network side in advance, but is notified to the UE by the network side in Step 1003, and the measured content is different.

Step 1005: the UE reports an MR according to the configuration in Step 1003. Step 1005 is similar to Step 1002, and the difference lies in that the specific configuration of the measurement executed here is not notified to the UE by the network side in advance, but is notified to the UE by the network side in Step 1003, and the reported specific content is different.

During the execution process from Step 1003 to Step 1005, in order to prevent other radio technology modules using the ISM frequency band from impacting the measurement or signalling interaction, it can be regulated that the modules work in a measurement gap only.

Step 1006: the network side sends a decision result to the UE. This step has the same operation as Step 806.

Step 1007: the UE executes the decision from the network side. This step has the same operation as Step 807.

In order to guarantee the correct execution of the above process, to optimize the process and to avoid abnormality, necessary protection processes are provided below.

Step 1008: start an IDC interference timer. In order to prevent the failure of the following process due to the occurrence of sudden error during the signalling interaction of the following process, the network side starts the interference IDC timer when sending information to the UE for the first time during the interference suppression process; in this process, the IDC interference timer is started while Step 1003 is executed.

Before the IDC interference timer times out, if the network side receives the feedback of interference suppression process completed from the UE mentioned in Step 1007, the network side stops the IDC interference timer; then, this interference suppression process is finished; when the IDC interference timer times out, if the network side does not receive the feedback from the UE, this interference suppression process fails; then Step 1009 is executed.

Step 1009: adopt other interference suppression processes or notify the UE to re-execute the above process. The other interference suppression processes can be any one of the processes shown in Fig. 8, Fig. 9 and Fig. 11, but are not limited to these processes, wherein all feasible interference suppression processes are included in the above optional scope. The network side also can notify the UE to re-execute the above process, that is, return to Step 1001.

Here, In order to make the network side to control flexibly and reduce the total time of the interference suppression process as far as possible, the time length of the IDC timer is different which is configured according to different network resource conditions.

This process has advantages that low complexity is required on the UE, the UE does not need to have a function of detecting that the UE is undergoing IDC interference in the device, and the framework and process of the current LTE system can be fully utilized, with forward and backward compatibility.

Fig. 11 shows a process of a fourth specific embodiment for suppressing IDC interference when UE judges the occurrence of IDC interference, which takes the communication between the LTE technology and the network side (eNB) for example, wherein the process shown in Fig. 11 includes the following steps:
Step 1101: the UE evaluates interference and performs a necessary measurement according to a policy configured by the network. Before this step, the network side configures for the UE a specific policy used for evaluating IDC interference and necessary measurements. The necessary measurement configuration refers that the network requests the UE to perform some measurements to provide a measurement result needed when the network makes an interference suppression measurement decision; the policy configured by the network might include: the network configures for the UE an measurement A2 with RSRQ measurement; or, the network side configures for the UE a threshold used for evaluating coexistence interference.
Step 1102: The UE reports an IDC interference indication and an MR carrying additional information. The UE also can report interference information to the network in conjunction with the judgment of the UE based on the policy configured by the network; corresponding to the policy configured by the network, the reported content specifically includes: when the UE judges that the measurement event A2 satisfies a condition of triggering a measurement report, the UE reports a measurement report triggered by the measurement event A2 to the network; when the UE judges that the signal quality of a serving cell is lower than this threshold or when the UE judges that interference strength is higher than this threshold according to the state of each radio module coexisting in the UE, the UE reports the interference information to the network. The MR carrying additional information includes the interference information, wherein the specific content of the interference information mainly includes the results of a specific measurement performed by the UE in Step 1101, thus, the MR is relevant to the specific measurement configuration provided for the UE by the network in this process.

During the execution process from Step 1101 to Step 1102, in order to prevent other radio technology modules using the ISM frequency band from impacting the measurement or signalling interaction, it can be regulated that the modules work in a measurement gap only.

Step 1103: the network side sends a decision result to the UE. This step has the same operation as Step 904.

During the execution process from Step 1102 to Step 1103, other radio technology modules using the ISM frequency band stop working temporarily; this is to guarantee that the reporting of measurement result and interference information and the issuing of network decision would not fail to transmit for the interference on the LTE technology from other radio technologies in the device.

Step 1104: the UE executes the decision from the network. This Step has the same operation as Step 905.

In order to guarantee the correct execution of the above process, to optimize the process and to avoid abnormality, necessary protection processes are provided below.

Step 1105: start an IDC interference timer. In order to prevent the failure of the following process due to the occurrence of sudden error during the signalling interaction of the following process, the network side starts an IDC interference timer when sending information to the UE for the first time during the interference suppression process; in this process, the IDC interference timer is started while Step 1103 is executed.

Before the IDC interference timer times out, if the network side receives the feedback of interference suppression process completed from the UE mentioned in Step 1104, the network side stops the IDC interference timer; then, this interference suppression process is finished; when the IDC interference timer times out, if the network side does not receive the feedback from the UE, this interference suppression process fails; then Step 1106 is executed.

Step 1106: adopt other interference suppression processes or notify the UE to re-execute the above process. The other interference suppression processes can be any one of the processes shown in Fig. 8, Fig. 9 and Fig. 10, but are not limited to these processes, wherein all feasible interference suppression processes are included in the above optional scope. The network side also can notify the UE to re-execute the above process, that is, return to Step 1101.

Here, In order to make the network side to control flexibly and reduce the total time of the interference suppression process as far as possible, the time length of the IDC timer is configured different according to different network resource conditions.

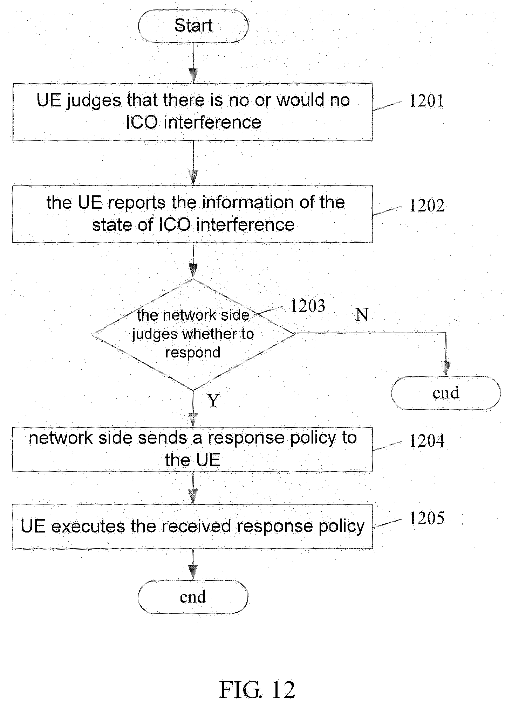

In addition, when the UE evaluates that there is no or would no IDC interference, the UE reports the state information of IDC interference to the network side; then, the network side judges whether to respond and, if so, judges what response should be given. The process shown in Fig. 12 includes the following steps:
Step 1201: the UE evaluates that there is no or would no IDC interference. The UE judges that there is no or would no IDC interference according to the working state of each radio technology in the device, that is, enabled/disabled state, and the working frequency of each radio technology.

Take the UE shown in Fig. 1 for example; the UE can learn the working state of the current LTE technology and WLAN technology through L101 or the control module 14. When IDC interference occurs, that is, the transmission of the LTE technology interferes with the receiving of the WLAN technology; however, through the L101 or control module 14, it is known that the WLAN technology is disabled or is to be disabled, or the WLAN technology has hopped or would hop to other frequencies that would not be interfered by the working frequency of the LTE technology, then, the UE can evaluate that there is no or would no IDC interference.

Step 1202: the UE reports the state information of IDC interference. The state information of IDC interference indicates that there is no or would no IDC interference, and further can include one of the following information:
measurement results of a serving cell and/or one or more neighbor cells of the UE;
technical type and service type of each enabled radio technology in the device;
interference direction of the IDC interference.

Step 1203: the network side judges whether to respond. The network side judges whether it is needed to respond to the UE according to the state information of IDC interference reported by the UE; if so, execute Step 1204; otherwise, end the process.

If the UE reports that there is no or would no IDC interference, and reports the measurement results of the serving cell of the UE and the measurement results of the one or more neighbour cells, the network side judges that the quality of the current serving cell is higher than that of the neighbour cell, and can give no response; if the network side judges that the quality of the current neighbour cell is higher than that of the serving cell, the network side can give a response to the UE.

Step 1204: the network side sends a response policy to the UE. The network side judges that it is needed to respond to the UE in Step 1203, and determines what response policy should be given according to the state information of IDC interference reported by the UE. The response policy might include one or more of the following:
the UE further performing measurement;
switching the UE to a neighbour cell with higher quality;
adding or activating one or more Scells which can perform carrier aggregation with a Pcell;
configuring a proper LTE technology transmission period for the UE; and
increasing the power of the LTE technology module of the UE.

Step 1205: the UE executes the received response policy. End the process.

Corresponding to the communication method with various radio technologies coexisting in UE, the present invention also provides a communication system with various radio technologies coexisting in UE, which includes: UE and a network side, wherein the UE is configured to judge a state of IDC interference independently and/or according to a policy configured by the network side, and to report the information of the state of IDC interference to the network side, and further configured to execute a decision indicated by the network side; and the network side is configured to indicate the decision to the UE according to the information of the state of IDC interference reported by the UE.

Preferably, the UE is further configured to evaluate the state of IDC interference according to a state of each radio module coexisting in the UE. The state of each radio module coexisting in the UE refers to an enabled/disabled state of each radio module coexisting in the UE.

If the radio module is in the enabled state, the information of the state further includes at least one of the following: working frequency information of each radio module in the enabled state, transmitter technical indicator of each radio in the enabled state, receiver technical indicator of each radio in the enabled state.

The policy configured by the network side is: an measurement event A1/2 with RSRQ measurement, or, a threshold for evaluating IDC interference.

The information of the state of IDC interference reported to the network side by the UE includes: interference/noninterference frequency information of the radio technology or interference/noninterference frequency scope information of the radio technology for communicating with the network side; or, interference/noninterference frequency information of the radio technologies or interference/noninterference frequency scope information of the radio technology and additional interference information, wherein the radio technology communicates with the network side and the additional interference information includes at least one of the following:
measurement results of a currently available serving cell and/or measurement results of one or more neighbor cells;
TDM information of various radio technologies which are working in a TDM mode; and
interference direction of the IDC interference.

The decision indicated by the network side includes at least one of the following:
stopping or canceling interference suppression procedures already executed by the UE;
switching to a cell which would not interfere with other radio technologies in the UE;
deleting or deactivating an Scell where IDC interference is generated;
adding or activating an Scell where IDC interference would not be generated;
the UE performing measurement according to a further measurement configuration configured by the network side, reporting measurement results according to measured content and waiting a further decision indicated by the network side;
configuring a TDM working mode for one or more enabled modules generating the IDC interference; and
reducing or limiting transmit power of one or more modules generating the IDC interference.

Preferably, the UE is further configured to disable one or more radio modules that are in the enabled state use an ISM frequency band inside the UE, when sending the information of the state of IDC interference to the network side, and to enable one or more radio modules that are disabled after receiving a further indication from the network side.

Preferably, when the decision indicated by the network side is the UE performing measurement according to a further measurement configuration configured by the network side, and the UE reports measurement results according to measured content and waits the further decision indicated by the network side, during the period from the time when the UE receives the further measurement configuration to the time when the UE reports the measurement results, one or more radio modules, which are in the enabled state and use the ISM frequency band inside the UE, work in a measurement gap only.

Preferably, the network side is further configured: to start an IDC interference timer, when sending information to the UE for the first time during an interference suppression process, before the IDC interference timer times out , if the network side receives a feedback of interference suppression completed from the UE, the network side stops the IDC interference timer. Otherwise, the network side notifies the UE to re-execute the interference suppression process or adopt other interference suppression processes.

The above are only the preferred embodiments of the present invention, and are not intended to limit the scope of protection of the present invention.

### Industrial Applicability

In the communication method and system with various radio technologies coexisting in UE provided by the present invention, the UE evaluates the state of IDC interference independently and/or according to a policy configured by the network side, and reports the obtained information of the state of IDC interference to the network side; and the UE executes the policy used for solving IDC interference indicated by the network side. With the present invention, the communication quality of various different radio technologies can be improved when the various different radio technologies coexist in the UE, and the communication experience of users can be improved.

## Claims

1. A communication method with various radio technologies coexisting in User Equipment "UE", **characterized by** comprising:
the UE evaluating (401) a state of In-device Coexistence "IDC" interference independently and/or according to a policy configured by a network side, and reporting (401) information of the state of IDC interference to the network side; and
the UE executing (402) a decision indicated by the network side;
wherein the UE evaluating the state of IDC interference independently is embodied as:
the UE evaluating the state of IDC interference according to a state of each radio module coexisting in the UE, the state of each radio module coexisting in the UE referring to an enabled/disabled state of each radio module coexisting in the UE.

2. The communication method with various radio technologies coexisting in the UE according to claim 1, **characterized in that**, if the radio module is in the enabled state, the information of the state further comprises at least one of the following: working frequency information of each radio module in the enabled state, transmitter technical indicator of each radio module in the enabled state, receiver technical indicator of each radio module in the enabled state.

3. The communication method with various radio technologies coexisting in the UE according to claim 1, **characterized in that** the policy configured by the network side is:
a measurement event with Reference Signal Received Quality "RSRQ" measurement, or,
a threshold for evaluating the IDC interference.

4. The communication method with various radio technologies coexisting in the UE according to claim 1, **characterized in that** the information of the state of IDC interference reported to the network side by the UE comprises:
interference/noninterference frequency information of the radio technologies or interference/noninterference frequency scope information of the radio technology, wherein the radio technologies are used to communicate with the network side; or
interference/noninterference frequency information of the radio technologies or interference/noninterference frequency scope information of the radio technologies and additional interference information, wherein the radio technologies are used to communicate with the network side;
preferably, the additional interference information comprises at least one of the following:
measurement results of a currently available serving cell and/or measurement results of one or more neighbor cells;
Time Division Multiplexing "TDM" information of various radio technologies which are working in a TDM mode; and
interference direction of the IDC interference.

5. The communication method with various radio technologies coexisting in the UE according to claim 1, **characterized in that** the decision indicated by the network side comprises at least one of the following:
stopping or canceling one or more interference suppression procedures already executed by the UE;
switching to a cell which would not interfere with other radio technologies in the UE;
deleting or deactivating one or more Secondary Cells "Scells" where the IDC interference is generated;
adding or activating one or more Scells where the IDC interference would not be generated;
the UE performing measurement according to a further measurement configuration configured by the network side, reporting measurement results according to measured content and waiting a further decision indicated by the network side;
configuring a TDM working mode for one or more enabled modules generating the IDC interference; and
reducing or limiting transmit power of the one or more modules generating the IDC interference.

6. The communication method with various radio technologies coexisting in the UE according to claim 1, **characterized in that** the method further comprises:
when the UE sends the information of the state of IDC interference to the network side, the UE disabling one or more radio modules that are in the enabled state and use an Industrial scientific and medical "ISM" frequency band inside the UE, and enabling one or more radio modules that are disabled again after the UE receives a further indication from the network side;
or, when the network side sends information to the UE for the first time during an interference suppression process, the network side starts an IDC interference timer, before the IDC interference timer times out, if the network side receives a feedback of interference suppression completed from the UE, the network side stopping the IDC interference timer, otherwise, the network side notifying the UE to re-execute the interference suppression process or adopting other interference suppression processes.

7. The communication method with various radio technologies coexisting in the UE according to claim 1 or 5, **characterized in that** the method further comprises:
when the decision indicated by the network side is the UE performing measurement according to a further measurement configuration configured by the network side, and the UE reports measurement results according to measured content and waits the further decision indicated by the network side, during the period from the time when the UE receives the further measurement configuration to the time when the UE reports the measurement results, one or more radio modules, which are in the enabled state and use the ISM frequency band inside the UE, working in a measurement gap only.

8. A communication system with various radio technologies coexisting in a User Equipment "UE", **characterized by** comprising: User Equipment "UE" and a network side, wherein the UE is configured to evaluate (401) a state of In-device Coexistence "IDC" interference independently and/or according to a policy configured by the network side, and to report (401) information of the state of IDC interference to the network side, and further configured to execute (402) a decision indicated by the network side; and
the network side is configured to indicate the decision to the UE according to the information of the state of IDC interference reported by the UE;
wherein the UE is further configured to evaluate the state of IDC interference according to a state of each radio module coexisting in the UE, the state of each radio module coexisting in the UE referring to an enabled/disabled state of each radio module coexisting in the UE.

9. The communication system with various radio technologies coexisting in the UE according to claim 8, **characterized in that**, if the radio module is in the enabled state, the information of the state further comprises at least one of the following: working frequency information of each radio module in the enabled state, transmitter technical indicator of each radio module in the enabled state, receiver technical indicator of each radio module in the enabled state.

10. The communication system with various radio technologies coexisting in the UE according to claim 8, **characterized in that** the policy configured by the network side is:
an measurement event with Reference Signal Received Quality "RSRQ" measurement, or,
a threshold for evaluating the IDC interference.

11. The communication system with various radio technologies coexisting in the UE according to claim 8, **characterized in that** the information of the state of IDC interference reported to the network side by the UE comprises:
interference/noninterference frequency information of the radio technologies or interference/noninterference frequency scope information of the radio technologies, wherein the radio technologies are used to communicate with the network side; or
interference/noninterference frequency information of the radio technologies or interference/noninterference frequency scope information of the radio technologies, and additional interference information, wherein the radio technologies are used to communicate with the network side;
preferably, the additional interference information comprises at least one of the following:
measurement results of a currently available serving cell and/or measurement results of one or more neighbor cells;
Time Division Multiplexing "TDM" information of various radio technologies which are working in a TDM mode; and
interference direction of the IDC interference.

12. The communication system with various radio technologies coexisting in the UE according to claim 8, **characterized in that** the decision indicated by the network side comprises at least one of the following:
stopping or canceling one or more interference suppression procedures already executed by the UE;
switching to a cell which would not interfere with other radio technologies in the UE;
deleting or deactivating one or more Scells where the IDC interference is generated;
adding or activating one or more Scells where IDC interference would not be generated;
the UE performing measurement according to a further measurement configuration configured by the network side, reporting measurement results according to measured content and waiting a further decision indicated by the network side;
configuring a TDM working mode for one or more enabled modules generating the IDC interference; and
reducing or limiting transmit power of the one or more modules generating the IDC interference.

13. The communication system with various radio technologies coexisting in a UE according to claim 9, **characterized in that** the UE is further configured to disable one or more radio modules that are in the enabled state and use an Industrial scientific and medical "ISM" frequency band inside the UE, when sending the information of the state of IDC interference to the network side, and to enable one or more radio modules that are disabled after receiving a further indication from the network side;
or, the network side is further configured to start an IDC interference timer, when sending information to the UE for the first time during an interference suppression process, before the IDC interference timer times out, if the network side receives a feedback of interference suppression completed from the UE, the network side stops the IDC interference timer, otherwise, the network side notifies the UE to re-execute the interference suppression process or adopt other interference suppression processes.

14. The communication system with various radio technologies coexisting in the UE according to claim 8 or 12, **characterized in that** when the decision indicated by the network side is the UE performing measurement according to a further measurement configuration configured by the network side, and the UE reports measurement results according to measured content and waits the further decision indicated by the network side, during the period from the time when the UE receives the further measurement configuration to the time when the UE reports the measurement results, one or more radio modules, which are in the enabled state and use the ISM frequency band inside the UE , work in a measurement gap only.

## Patentansprüche

1. Kommunikationsverfahren mit verschiedenen Funktechnologien, die in Benutzerendgerät, "UE", koexistieren, **dadurch gekennzeichnet, dass** es umfasst:
Bewerten (401), durch das UE, eines Zustands von geräteinterner Koexistenz-, "IDC", Interferenz unabhängig und/oder gemäß einer von einer Netzwerkseite konfigurierten Richtlinie, und Melden (401) von Informationen bezüglich des IDC-Interferenzzustands an die Netzwerkseite; und
Ausführen (402), durch das UE, einer von der Netzwerkseite angegebenen Entscheidung;
wobei das unabhängige Bewerten des IDC-Interferenzzustands durch das UE realisiert wird als:
Bewerten, durch das UE, des IDC-Interferenzzustands gemäß einem Zustand jedes Funkmoduls, das im UE koexistiert, wobei sich der Zustand jedes im UE koexistierenden Funkmoduls auf einen aktivierten/deaktivierten Zustand jedes im UE koexistierenden Funkmoduls bezieht.

2. Kommunikationsverfahren mit verschiedenen im UE koexistierenden Funktechnologien nach Anspruch 1, **dadurch gekennzeichnet, dass** wenn sich das Funkmodul im aktivierten Zustand befindet, die Informationen bezüglich des Zustands weiter mindestens eines aus den Folgenden umfassen: Arbeitsfrequenzinformationen jedes Funkmoduls im aktivierten Zustand, sendertechnische Angabe jedes Funkmoduls im aktivierten Zustand, empfängertechnische Angabe jedes Funkmoduls im aktivierten Zustand.

3. Kommunikationsverfahren mit verschiedenen im UE koexistierenden Funktechnologien nach Anspruch 1, **dadurch gekennzeichnet, dass** die von der Netzwerkseite konfigurierte Richtlinie ist:
ein Messereignis mit Referenzsignal-Empfangsqualität-, "RSRQ", Messung, oder
ein Schwellenwert zum Bewerten der IDC-Interferenz.

4. Kommunikationsverfahren mit verschiedenen im UE koexistierenden Funktechnologien nach Anspruch 1, **dadurch gekennzeichnet, dass** die vom UE an die Netzwerkseite gemeldeten Informationen bezüglich des IDC-Interferenzzustands umfassen:
Interferenz-/Nichtinterferenz-Frequenzinformationen der Funktechnologien oder Interferenz-/Nichtinterferenz-Frequenzbereichsinformationen der Funktechnologie, wobei die Funktechnologien verwendet werden, um mit der Netzwerkseite zu kommunizieren; oder
Interferenz-/Nichtinterferenz-Frequenzinformationen der Funktechnologien oder Interferenz-/Nichtinterferenz-Frequenzbereichsinformationen der Funktechnologien und zusätzliche Interferenzinformationen, wobei die Funktechnologien verwendet werden, um mit der Netzwerkseite zu kommunizieren;
vorzugsweise die zusätzlichen Interferenzinformationen mindestens eines aus den Folgenden umfassen:
Messergebnisse einer aktuell verfügbaren dienenden Zelle und/oder Messergebnisse von einer oder mehreren Nachbarzellen;
Zeitmultiplex-, "TDM", Informationen bezüglich verschiedener Funktechnologien, die in einem TDM-Modus arbeiten; und
Interferenzrichtung der IDC-Interferenz.

5. Kommunikationsverfahren mit verschiedenen im UE koexistierenden Funktechnologien nach Anspruch 1, **dadurch gekennzeichnet, dass** die von der Netzwerkseite angegebene Entscheidung mindestens eines aus den Folgenden umfasst:
Stoppen oder Aufheben von einer oder mehreren Interferenzunterdrückungsprozeduren, die bereits vom UE ausgeführt werden;
Umschalten auf eine Zelle, die nicht mit anderen Funktechnologien im UE interferieren würde;
Löschen oder Deaktivieren von einer oder mehreren sekundären Zellen, "Scells", dort, wo die IDC-Interferenz erzeugt wird;
Hinzufügen oder Aktivieren von einer oder mehreren Scells dort, wo die IDC-Interferenz nicht erzeugt würde;
Durchführen, durch das UE, von Messung gemäß einer weiteren von der Netzwerkseite konfigurierten Messkonfiguration, Melden von Messergebnissen gemäß gemessenem Inhalt, und Abwarten einer weiteren Entscheidung, die von der Netzwerkseite angegeben wird;
Konfigurieren eines TDM-Arbeitsmodus für ein oder mehrere aktivierte Module, die die IDC-Interferenz erzeugen; und
Reduzieren oder Begrenzen von Übertragungsleistung des einen oder mehrerer Module, die die IDC-Interferenz erzeugen.

6. Kommunikationsverfahren mit verschiedenen im UE koexistierenden Funktechnologien nach Anspruch 1, **dadurch gekennzeichnet, dass** das Verfahren weiter umfasst:
wenn das UE die Informationen bezüglich des IDC-Interferenzzustands an die Netzwerkseite sendet, Deaktivieren, durch das UE, von einem oder mehreren Funkmodulen, die sich im aktivierten Zustand befinden, und Verwenden eines Industrie-, Wissenschafts- und Medizin-, "ISM", Frequenzbands innerhalb des UE, und erneutes Aktivieren von einem oder mehreren Funkmodulen, die deaktiviert sind, nachdem das UE eine weitere Angabe von der Netzwerkseite empfängt;
oder, wenn die Netzwerkseite während eines Interferenzunterdrückungsprozesses erstmals Informationen an das UE sendet, startet die Netzwerkseite einen IDC-Interferenztimer, wenn bevor der IDC-Interferenztimer abläuft die Netzwerkseite ein Interferenzunterdrückung-abgeschlossen-Feedback vom UE empfängt, , Stoppen des IDC-Interferenztimers durch die Netzwerkseite, andernfalls Benachrichtigen des UE durch die Netzwerkseite darüber, den Interferenzunterdrückungsprozess nochmals auszuführen oder andere Interferenzunterdrückungsprozesse zu übernehmen.

7. Kommunikationsverfahren mit verschiedenen im UE koexistierenden Funktechnologien nach Anspruch 1 oder 5, **dadurch gekennzeichnet, dass** das Verfahren weiter umfasst:
wenn die von der Netzwerkseite angegebene Entscheidung das Durchführen von Messung durch das UE gemäß einer weiteren von der Netzwerkseite konfigurierten Messkonfiguration ist, und das UE Messergebnisse gemäß gemessenem Inhalt meldet und die von der Netzwerkseite angegebene weitere Entscheidung abwartet, Arbeiten von einem oder mehreren Funkmodulen, die sich im aktivierten Zustand befinden und das ISM-Frequenzband innerhalb des UE verwenden, während des Zeitraums von dem Zeitpunkt, wenn das UE die weitere Messkonfiguration empfängt, bis zu dem Zeitpunkt, wenn das UE die Messergebnisse meldet, in nur einer Messlücke.

8. Kommunikationssystem mit verschiedenen Funktechnologien, die in einem Benutzerendgerät, "UE", koexistieren, **dadurch gekennzeichnet, dass** es umfasst: Benutzerendgerät, "UE", und eine Netzwerkseite, wobei das UE dazu konfiguriert ist, einen Zustand von geräteinterner Koexistenz-, "IDC", Interferenz unabhängig und/oder gemäß einer von einer Netzwerkseite konfigurierten Richtlinie zu bewerten (401) und Informationen bezüglich des IDC-Interferenzzustands an die Netzwerkseite zu melden (401), und weiter dazu konfiguriert ist, eine von der Netzwerkseite angegebene Entscheidung auszuführen (402); und
die Netzwerkseite dazu konfiguriert ist, dem UE die Entscheidung gemäß den vom UE bezüglich des IDC-Interferenzzustands gemeldeten Informationen anzugeben;
wobei das UE weiter dazu konfiguriert ist, den IDC-Interferenzzustand gemäß einem Zustand jedes Funkmoduls, das im UE koexistiert, zu bewerten, wobei sich der Zustand jedes im UE koexistierenden Funkmoduls auf einen aktivierten/deaktivierten Zustand jedes im UE koexistierenden Funkmoduls bezieht.

9. Kommunikationssystem mit verschiedenen im UE koexistierenden Funktechnologien nach Anspruch 8, **dadurch gekennzeichnet, dass** wenn sich das Funkmodul im aktivierten Zustand befindet, die Informationen bezüglich des Zustands weiter mindestens eines aus den Folgenden umfassen: Arbeitsfrequenzinformationen jedes Funkmoduls im aktivierten Zustand, sendertechnische Angabe jedes Funkmoduls im aktivierten Zustand, empfängertechnische Angabe jedes Funkmoduls im aktivierten Zustand.

10. Kommunikationssystem mit verschiedenen im UE koexistierenden Funktechnologien nach Anspruch 8, **dadurch gekennzeichnet, dass** die von der Netzwerkseite konfigurierte Richtlinie ist:
ein Messereignis mit Referenzsignal-Empfangsqualität-, "RSRQ", Messung, oder
ein Schwellenwert zum Bewerten der IDC-Interferenz.

11. Kommunikationssystem mit verschiedenen im UE koexistierenden Funktechnologien nach Anspruch 8, **dadurch gekennzeichnet, dass** die vom UE an die Netzwerkseite gemeldeten Informationen bezüglich des IDC-Interferenzzustands umfassen:
Interferenz-/Nichtinterferenz-Frequenzinformationen der Funktechnologien oder Interferenz-/Nichtinterferenz-Frequenzbereichsinformationen der Funktechnologien, wobei die Funktechnologien verwendet werden, um mit der Netzwerkseite zu kommunizieren; oder
Interferenz-/Nichtinterferenz-Frequenzinformationen der Funktechnologien oder Interferenz-/Nichtinterferenz-Frequenzbereichsinformationen der Funktechnologien und zusätzliche Interferenzinformationen, wobei die Funktechnologien verwendet werden, um mit der Netzwerkseite zu kommunizieren;
vorzugsweise die zusätzlichen Interferenzinformationen mindestens eines aus den Folgenden umfassen:
Messergebnisse einer aktuell verfügbaren dienenden Zelle und/oder Messergebnisse von einer oder mehreren Nachbarzellen;
Zeitmultiplex-, "TDM", Informationen bezüglich verschiedener Funktechnologien, die in einem TDM-Modus arbeiten; und
Interferenzrichtung der IDC-Interferenz.

12. Kommunikationssystem mit verschiedenen im UE koexistierenden Funktechnologien nach Anspruch 8, **dadurch gekennzeichnet, dass** die von der Netzwerkseite angegebene Entscheidung mindestens eines aus den Folgenden umfasst:
Stoppen oder Aufheben von einer oder mehreren Interferenzunterdrückungsprozeduren, die bereits vom UE ausgeführt werden;
Umschalten auf eine Zelle, die nicht mit anderen Funktechnologien im UE interferieren würde;
Löschen oder Deaktivieren von einer oder mehreren Scells dort, wo die IDC-Interferenz erzeugt wird;
Hinzufügen oder Aktivieren von einer oder mehreren Scells dort, wo die IDC-Interferenz nicht erzeugt würde;
Durchführen, durch das UE, von Messung gemäß einer weiteren von der Netzwerkseite konfigurierten Messkonfiguration, Melden von Messergebnissen gemäß gemessenem Inhalt, und Abwarten einer weiteren Entscheidung, die von der Netzwerkseite angegeben wird;
Konfigurieren eines TDM-Arbeitsmodus für ein oder mehrere aktivierte Module, die die IDC-Interferenz erzeugen; und
Reduzieren oder Begrenzen von Übertragungsleistung des einen oder mehrerer Module, die die IDC-Interferenz erzeugen.

13. Kommunikationssystem mit verschiedenen in einem UE koexistierenden Funktechnologien nach Anspruch 9, **dadurch gekennzeichnet, dass** das UE weiter dazu konfiguriert ist, ein oder mehrere Funkmodule, die sich im aktivierten Zustand befinden, zu deaktivieren und beim Senden der Informationen bezüglich des IDC-Interferenzzustands an die Netzwerkseite ein Industrie-, Wissenschafts- und Medizin-, "ISM", Frequenzband innerhalb des UE zu verwenden, und ein oder mehrere Funkmodule, die deaktiviert sind, nach Empfangen einer weiteren Angabe von der Netzwerkseite erneut zu aktivieren;
oder die Netzwerkseite weiter dazu konfiguriert ist, beim erstmaligen Senden von Informationen an das UE während eines Interferenzunterdrückungsprozesses einen IDC-Interferenztimer zu starten, wenn die Netzwerkseite bevor der IDC-Interferenztimer abläuft ein Interferenzunterdrückung-abgeschlossen-Feedback vom UE empfängt, die Netzwerkseite den IDC-Interferenztimer stoppt, andernfalls die Netzwerkseite das UE darüber benachrichtigt, den Interferenzunterdrückungsprozess nochmals auszuführen oder andere Interferenzunterdrückungsprozesse zu übernehmen.

14. Kommunikationssystem mit verschiedenen im UE koexistierenden Funktechnologien nach Anspruch 8 oder 12, **dadurch gekennzeichnet, dass** wenn die von der Netzwerkseite angegebene Entscheidung das Durchführen von Messung durch das UE gemäß einer weiteren von der Netzwerkseite konfigurierten Messkonfiguration ist, und das UE Messergebnisse gemäß gemessenem Inhalt meldet und die von der Netzwerkseite angegebene weitere Entscheidung abwartet, ein oder mehrere Funkmodule, die sich im aktivierten Zustand befinden und das ISM-Frequenzband innerhalb des UE verwenden, während des Zeitraums von dem Zeitpunkt, wenn das UE die weitere Messkonfiguration empfängt, bis zu dem Zeitpunkt, wenn das UE die Messergebnisse meldet, nur in einer Messlücke arbeiten.

## Revendications

1. Procédé de communication avec diverses technologies radio coexistant dans un équipement utilisateur « UE », **caractérisé en ce qu'**il comprend :
l'évaluation (401) par l'UE d'un état d'interférence de coexistence dans le dispositif « IDC » indépendamment et/ou en fonction d'une politique configurée par un côté réseau, et le rapport (401) d'une information de l'état d'interférence IDC au côté réseau ; et
l'exécution (402) par l'UE d'une décision indiquée par le côté réseau ;
dans lequel l'évaluation par l'UE de l'état d'interférence IDC indépendamment est mise en oeuvre par :
l'évaluation par l'UE de l'état d'interférence IDC en fonction d'un état de chaque module radio coexistant dans l'UE, l'état de chaque module radio coexistant dans l'UE se référant à un état activé/désactivé de chaque module radio coexistant dans l'UE.

2. Procédé de communication avec diverses technologies radio coexistant dans l'UE selon la revendication 1, **caractérisé en ce que**, si le module radio est dans un état désactivé, l'information de l'état comprend en outre au moins un de ce qui suit : une information de fréquence d'exercice de chaque module radio dans l'état activé, un indicateur technique d'émetteur de chaque module radio dans l'état activé, un indicateur technique de récepteur de chaque module radio dans l'état activé.

3. Procédé de communication avec diverses technologies radio coexistant dans l'UE selon la revendication 1, **caractérisé en ce que** la politique configurée par le côté réseau est :
un événement de mesure avec mesure de qualité de signal reçu de référence « RSRQ », ou
un seuil pour l'évaluation de l'interférence IDC.

4. Procédé de communication avec diverses technologies radio coexistant dans l'UE selon la revendication 1, **caractérisé en ce que** l'information de l'état d'interférence IDC rapportée au côté réseau par l'UE comprend :
une information de fréquence d'interférence/de non-interférence des technologies radio ou une information de plage de fréquences d'interférence/de non-interférence de la technologie radio, dans lequel les technologies radio sont utilisées pour communiquer avec le côté réseau ; ou
une information de fréquence d'interférence/de non-interférence des technologies radio ou une information de plage de fréquences d'interférence/de non-interférence des technologies radio et une information d'interférence additionnelle, dans lequel les technologies radio sont utilisées pour communiquer avec le côté réseau ;
de préférence, l'information d'interférence additionnelle comprend au moins un de ce qui suit :
des résultats de mesure d'une cellule de desserte actuellement disponible et/ou des résultats de mesure d'une ou plusieurs cellules voisines ;
une information de multiplexage par répartition dans le temps « TDM » de diverses technologies radio qui fonctionnent dans un mode TDM ; et
une direction d'interférence de l'interférence IDC.

5. Procédé de communication avec diverses technologies radio coexistant dans l'UE selon la revendication 1, **caractérisé en ce que** la décision indiquée par le côté réseau comprend au moins un de ce qui suit :
l'interruption ou l'annulation d'une ou plusieurs procédures de suppression d'interférence déjà exécutées par l'UE ;
la commutation vers une cellule qui n'interférerait pas avec d'autres technologies radio dans l'UE ;
la suppression ou la désactivation d'une ou plusieurs cellules secondaires « Scells » où l'interférence IDC est générée ;
l'ajout ou l'activation d'une ou plusieurs Scells où l'interférence IDC ne serait pas générée ;
l'exécution par l'UE d'une mesure en fonction d'une autre configuration de mesure configurée par le côté réseau, le rapport de résultats de mesure en fonction du contenu mesuré et l'attente d'une autre décision indiquée par le côté réseau ;
la configuration d'un mode de fonctionnement TDM pour un ou plusieurs modules activés générant l'interférence IDC ; et
la réduction ou la limitation d'une puissance de transmission des un ou plusieurs modules générant l'interférence IDC.

6. Procédé de communication avec diverses technologies radio coexistant dans l'UE selon la revendication 1, **caractérisé en ce que** le procédé comprend en outre :
quand l'UE envoie l'information de l'état d'interférence IDC au côté réseau, la désactivation par l'UE d'un ou plusieurs modules radio qui sont dans l'état activé et utilisent une bande de fréquences industrielle scientifique et médicale « ISM » à l'intérieur de l'UE, et l'activation d'un ou plusieurs modules radio qui sont à nouveau désactivés après que l'UE reçoit une autre indication à partir du côté réseau ;
ou quand le côté réseau envoie des informations à l'UE pour la première fois durant un processus de suppression d'interférence, le côté réseau démarre un compteur de temps d'interférence IDC, avant que le compteur de temps d'interférence IDC expire, si le côté réseau reçoit un retour de suppression d'interférence achevée par l'UE, l'arrêt par le côté réseau du compteur de temps d'interférence IDC, autrement la notification par le côté réseau à l'UE de ré-exécuter le processus de suppression d'interférence ou l'adoption d'autres processus de suppression d'interférence.

7. Procédé de communication avec diverses technologies radio coexistant dans l'UE selon la revendication 1 ou 5, **caractérisé en ce que** le procédé comprend en outre :
quand la décision indiquée par le côté réseau est l'exécution par l'UE d'une mesure en fonction d'une autre configuration de mesure configurée par le côté réseau, et l'UE rapporte des résultats de mesure en fonction d'un contenu de mesure et attend l'autre décision indiquée par le côté réseau, durant la période du temps où l'UE reçoit l'autre configuration de mesure au temps où l'UE rapporte des résultats de mesure, un ou plusieurs modules radio, qui sont dans l'état activé et utilisent la bande de fréquences ISM à l'intérieur de l'UE, le fonctionnement seulement dans un intervalle de mesure.

8. Système de communication avec diverses technologies radio coexistant dans un équipement utilisateur « UE », **caractérisé en ce qu'**il comprend : un équipement utilisateur « UE » et un côté réseau, dans lequel l'UE est configuré pour évaluer (401) un état d'interférence de coexistence dans le dispositif « IDC » indépendamment et/ou en fonction d'une politique configurée par le côté réseau, et rapporter (401) une information de l'état d'interférence IDC au côté réseau, et configuré en outre pour exécuter (402) une décision indiquée par le côté réseau ; et
le côté réseau est configuré pour indiquer la décision à l'UE en fonction de l'information de l'état d'interférence IDC rapporté par l'UE ;
dans lequel l'UE est configuré en outre pour évaluer l'état d'interférence IDC en fonction d'un état de chaque module radio coexistant dans l'UE, l'état de chaque module radio coexistant dans l'UE se référant à un état activé/désactivé de chaque module radio coexistant dans l'UE.

9. Système de communication avec diverses technologies radio coexistant dans l'UE selon la revendication 8, **caractérisé en ce que**, si le module radio est dans un état activé, l'information de l'état comprend en outre au moins un de ce qui suit : une information de fréquence d'exercice de chaque module radio dans l'état activé, un indicateur technique d'émetteur de chaque module radio dans l'état activé, un indicateur technique de récepteur de chaque module radio dans l'état activé.

10. Système de communication avec diverses technologies radio coexistant dans l'UE selon la revendication 8, **caractérisé en ce que** la politique configurée par le côté réseau est :
un événement de mesure avec mesure de qualité de signal reçu de référence « RSRQ », ou
un seuil pour l'évaluation de l'interférence IDC.

11. Système de communication avec diverses technologies radio coexistant dans l'UE selon la revendication 8, **caractérisé en ce que** l'information de l'état d'interférence IDC rapportée au côté réseau par l'UE comprend :
une information de fréquence d'interférence/de non-interférence des technologies radio ou une information de plage de fréquences d'interférence/de non-interférence de la technologie radio, dans lequel les technologies radio sont utilisées pour communiquer avec le côté réseau ; ou
une information de fréquence d'interférence/de non-interférence des technologies radio ou une information de plage de fréquences d'interférence/de non-interférence des technologies radio et une information d'interférence additionnelle, dans lequel les technologies radio sont utilisées pour communiquer avec le côté réseau ;
de préférence, l'information d'interférence additionnelle comprend au moins un de ce qui suit :
des résultats de mesure d'une cellule de desserte actuellement disponible et/ou des résultats de mesure d'une ou plusieurs cellules voisines ;
une information de multiplexage par répartition dans le temps « TDM » de diverses technologies radio qui fonctionnent dans un mode TDM ; et
une direction d'interférence de l'interférence IDC.

12. Système de communication avec diverses technologies radio coexistant dans l'UE selon la revendication 8, **caractérisé en ce que** la décision indiquée par le côté réseau comprend au moins un de ce qui suit :
l'interruption ou l'annulation d'une ou plusieurs procédures de suppression d'interférence déjà exécutées par l'UE ;
la commutation vers une cellule qui n'interférerait pas avec d'autres technologies radio dans l'UE ;
la suppression ou la désactivation d'une ou plusieurs cellules secondaires « Scells » où l'interférence IDC est générée ;
l'ajout ou l'activation d'une ou plusieurs Scells où l'interférence IDC ne serait pas générée ;
l'exécution par l'UE d'une mesure en fonction d'une autre configuration de mesure configurée par le côté réseau, le rapport de résultats de mesure en fonction du contenu mesuré et l'attente d'une autre décision indiquée par le côté réseau ;
la configuration d'un mode de fonctionnement TDM pour un ou plusieurs modules activés générant l'interférence IDC ; et
la réduction ou la limitation d'une puissance de transmission des un ou plusieurs modules générant l'interférence IDC.

13. Système de communication avec diverses technologies radio coexistant dans l'UE selon la revendication 9, **caractérisé en ce que** l'UE est configuré en outre pour désactiver un ou plusieurs modules radio qui sont dans l'état activé et utilisent une bande de fréquences industrielle scientifique et médicale « ISM » à l'intérieur de l'UE, lors de l'envoi de l'information de l'état d'interférence IDC au côté réseau, et activer un ou plusieurs modules radio qui sont à nouveau désactivés après la réception d'une autre indication à partir du côté réseau ;
ou le côté réseau est configuré en outre pour démarrer un compteur de temps d'interférence IDC, lors de l'envoi d'informations à l'UE pour la première fois durant un processus de suppression d'interférence, avant que le compteur de temps d'interférence IDC expire, si le côté réseau reçoit un retour de suppression d'interférence achevée par l'UE, l'arrêt par le côté réseau du compteur de temps d'interférence IDC, autrement la notification par le côté réseau à l'UE de ré-exécuter le processus de suppression d'interférence ou l'adoption d'autres processus de suppression d'interférence.

14. Système de communication avec diverses technologies radio coexistant dans l'UE selon la revendication 8 ou 12, **caractérisé en ce que**, quand la décision indiquée par le côté réseau est l'exécution par l'UE d'une mesure en fonction d'une autre configuration de mesure configurée par le côté réseau, et l'UE rapporte des résultats de mesure en fonction d'un contenu de mesure et attend l'autre décision indiquée par le côté réseau, durant la période du temps où l'UE reçoit l'autre configuration de mesure au temps où l'UE rapporte des résultats de mesure, un ou plusieurs modules radio, qui sont dans l'état activé et utilisent la bande de fréquences ISM à l'intérieur de l'UE, le fonctionnement seulement dans un intervalle de mesure.
